# EUROPEAN PATENT APPLICATION

(11) **EP 4 443 285 A1**
(43) Date of publication of application: **09.10.2024**
(21) Application number: 24160286.1
(22) Date of filing: 28.02.2024
(51) Int. Cl.: G06F 3/12

(54) **IMAGE FORMING APPARATUS**

(30) Priority: 07.04.2023 JP 2023062621
(71) Applicant: Brother Kogyo Kabushiki Kaisha, Nagoya Aichi 467-8561 (JP)
(72) Inventor: KANEKO, Tomoya, Nagoya, 467-8562 (JP); TAKEUCHI, Shun, Nagoya, 467-8562 (JP)
(74) Representative: J A Kemp LLP

(57) **Abstract**

An image forming apparatus includes a wireless LAN interface, and a computer. The computer is configured to set a connection restriction condition related to a password. In a case where the image forming apparatus receives a connection instruction, in a state where a connection between the wireless LAN access point and the wireless LAN interface is not established, the computer is further configured to perform a connection attempt processing of attempting to establish the connection between the wireless LAN access point and the wireless LAN interface, and in a case where authentication using a password is necessary for establishing the connection between the wireless LAN access point and the wireless LAN interface and in a case where the password used for establishing the connection satisfies the connection restriction condition set by the administrator, a restriction processing of restricting the wireless LAN communication via the wireless LAN access point.

## Description

### TECHNICAL FIELD

The present disclosure relates to an image forming apparatus configured to connect to a wireless LAN access point.

### BACKGROUND ART

In recent years, with the spread of telework, as disclosed in a related art, an image forming apparatus such as a printer is installed in a space outside a company, and a work using the image forming apparatus is performed in the space outside the company. In a system disclosed in the related art, the image forming apparatus can be used by connecting the image forming apparatus to a LAN in advance, connecting a portable terminal carried by a user to a wireless Wi-Fi access point, and downloading a multipurpose application program from the portable terminal.

In a case where the image forming apparatus is used in the space outside the company, the image forming apparatus may also be connected to a wireless LAN access point. In this case, a wireless LAN access point having a high security is not always installed in the space outside the company. The connection with a wireless LAN access point having a low security poses a risk of information leakage, and thus the connection with such a wireless LAN access point is not preferable. On the other hand, in a case where the connection with the wireless LAN access point is restricted, a convenience of the space outside the company may be impaired. Therefore, there is room for improvement in a technique for connecting the image forming apparatus with the wireless LAN access point.

### SUMMARY

An image forming apparatus including: a wireless LAN interface; a user interface; an image forming engine; and a computer, in which the image forming apparatus is configured to receive an instruction related to image formation from an external device, through wireless LAN communication via a wireless LAN access point for which connection with the wireless LAN interface is established, and in a case where the image forming apparatus receives the instruction related to the image formation from the external device, through the wireless LAN communication via the wireless LAN access point for which the connection is established, the image forming apparatus is configured to cause the image forming engine to form an image, the computer is configured to set a connection restriction condition related to a password, in a state where the image forming apparatus is configured to receive an input by an administrator, and in a case where the image forming apparatus receives a connection instruction via the user interface, in a state where the connection between the wireless LAN access point and the wireless LAN interface is not established, the computer is further configured to perform: a connection attempt processing of attempting to establish the connection between the wireless LAN access point and the wireless LAN interface; and in a case where authentication using a password is necessary for establishing the connection between the wireless LAN access point and the wireless LAN interface and in a case where the password used for establishing the connection satisfies the connection restriction condition set by the administrator, a restriction processing of restricting the wireless LAN communication via the wireless LAN access point.

An image forming apparatus including: a wireless LAN interface; a user interface; an image forming engine; and a computer, in which the image forming apparatus is configured to receive an instruction related to image formation from an external device, through wireless LAN communication via a wireless LAN access point for which connection with the wireless LAN interface is established, and the image forming apparatus is configured to cause the image forming engine to form an image, in a case where the image forming apparatus receives the instruction related to the image formation from the external device, through the wireless LAN communication via the wireless LAN access point for which the connection is established, the computer is configured to set a low security condition indicating that a security of the wireless LAN access point is low, in a state where the image forming apparatus is configured to receive an input by an administrator, and in a case where a connection instruction is received via the user interface in a state where the connection with the wireless LAN access point is not established, the computer is further configured to perform: a search processing of searching for connectable wireless LAN access points; a selection processing of receiving selection of the wireless LAN access point to be connected, from the wireless LAN access points searched for in the search processing, via the user interface; and a restriction processing of restricting the wireless LAN communication via the wireless LAN access point selected in the selection processing, in a case where the wireless LAN access point selected in the selection processing satisfies the low security condition set by the administrator.

### BRIEF DESCRIPTION OF DRAWINGS

FIG. 1 is a block diagram illustrating an electrical configuration of an MFP according to the present embodiment.
FIGs. 2A and 2B are diagrams illustrating examples of a use environment of the MFP.
FIG. 3 is a flowchart illustrating an example of a procedure of a management processing.
FIG. 4 is a diagram illustrating an example of a setting screen.
FIG. 5 is a flowchart illustrating an example of a procedure of an AP connection processing.
FIG. 6 is a diagram illustrating an example of a standby screen.
FIG. 7 is a diagram illustrating an example of an access point selection screen.
FIG. 8 is a flowchart illustrating an example of a procedure of a restriction establishment processing.
FIG. 9 is a diagram illustrating an example of a warning screen.
FIG. 10 is a diagram illustrating an example of a connection impossible screen.
FIG. 11 is a diagram illustrating an example of an access point selection screen.

### DESCRIPTION

Hereinafter, an embodiment embodying an image forming apparatus will be described in detail with reference to the accompanying drawings. The present specification discloses a multifunction peripheral (hereinafter, referred to as an "MFP") having a wireless communication function.

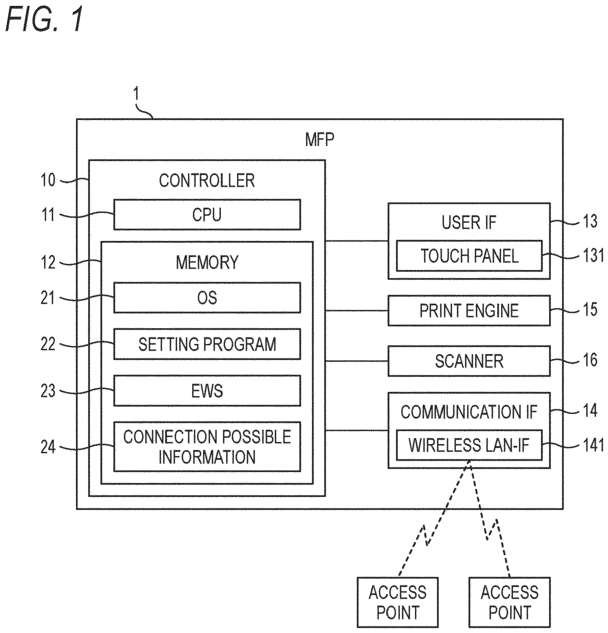

As illustrated in FIG. 1, an MFP 1 according to the present embodiment includes a controller 10 including a CPU 11 and a memory 12. The MFP 1 is an example of the image forming apparatus. The CPU 11 is an example of a computer. In addition, the MFP 1 includes a user interface (hereinafter, referred to as a "user IF") 13, a communication interface (hereinafter, referred to as a "communication IF") 14, a print engine 15, and a scanner 16, which are electrically connected to the controller 10. The print engine 15 and the scanner 16 are examples of an image forming engine.

The CPU 11 is configured to execute various types of processing, in accordance with a program read from the memory 12 and based on a user's operation. As illustrated in FIG. 1, the memory 12 is configured to store various application programs (hereinafter, referred to as "applications") including an operating system (hereinafter, referred to as an "OS") 21, a setting program 22, a program and data (hereinafter, referred to as an "EWS") 23 for implementing an embedded web server function, and connection possible information 24, or various types of data. The program and data will be described later in detail.

The memory 12 is used as a work area in a case where various types of processing are executed. A buffer provided in the CPU 11 is also an example of the memory 12. An example of the memory 12 is not limited to a ROM, a RAM, an HDD, and the like incorporated in the MFP 1, and may be a storage medium configured to be read and written by the CPU 11. The computer-readable storage medium is a non-transitory medium. The non-transitory medium also includes a recording medium such as a CD-ROM or a DVD-ROM, in addition to the above-described examples. The non-transitory medium is also a tangible medium. On the other hand, an electric signal carrying a program downloaded from a server or the like on the Internet is a computer-readable signal medium, which is a kind of computer-readable medium, but is not included in the non-transitory computer-readable storage medium.

The user IF 13 includes hardware configured to display a screen for notifying the user of information, and hardware configured to receive an operation from a user. The user IF 13 includes a touch panel 131 having a screen display function and an operation receiving function. The user IF 13 may be a combination of a display unit and an operation button.

The communication IF 14 includes hardware for communicating with an external device. The communication IF 14 includes a wireless LAN interface (hereinafter, referred to as a "wireless LAN-IF") 141 having at least a wireless LAN communication function corresponding to a Wi-Fi (registered trademark) standard. The MFP 1 is configured to be connected to a wireless LAN access point (hereinafter, simply referred to as an "access point" or an "AP") having a wireless LAN communication function, via the wireless LAN-IF 141. The communication IF 14 may have a function corresponding to a communication standard such as Ethernet (registered trademark) or USB. The MFP 1 may include a plurality of communication IFs 14 corresponding to a plurality of communication standards.

The print engine 15 has a configuration in which an image based on image data is printed on a print medium such as a sheet. A printing method of the print engine 15 is, for example, an electrophotographic method or an inkjet method. The scanner 16 includes a configuration in which an image of a document is read and image data is acquired.

Next, an operation procedure of the MFP 1 will be described with reference to a flowchart. The following processing basically indicates processing of the CPU 11 according to a command written in a program. That is, the processing such as "judgment", "extraction", "selection", "calculation", "determination", "specification", "acquisition", "reception", and "control" in the following described represent the processing of the CPU. The processing by the CPU also includes hardware control using API of the OS. In the present specification, the description of the OS is omitted, and an operation of each program is described. That is, in the following description, the description that "a program B controls hardware C" may refer to "the program B controls the hardware C, using the API of the OS". In addition, the processing of the CPU according to the command written in the program may be described in omitted words. For example, the processing of the CPU may be described as "being performed by the CPU". In addition, the processing of the CPU according to the command written in the program may be described in words in which the CPU is omitted, such as "being performed by the program A".

The term "acquisition" is used as a concept indicating that a request is not essential. That is, processing of receiving data without a request from the CPU is also included in a concept indicating that "the CPU acquires data". In addition, the term "data" in the present specification is represented by a computer-readable bit string. Data having substantially the same meaning and different formats are treated as the same data. The same applies to the "information" in the present specification. In addition, the term "request" or "instruct" is a concept indicating that information indicating that a request is being made or information indicating that an instruction is being given is output to a partner. In addition, the information indicating that a request is being made or the information indicating that an instruction is being given is simply referred to as a "request" or "instruction".

According to the CPU, processing of determining whether information A indicates that it is a matter B may be conceptually described as "determining whether it is the matter B, based on the information A". According to the CPU, processing of determining whether the information A indicates that it is the matter B or a matter C may be conceptually described as "determining whether it is the matter B or the matter C, based on the information A".

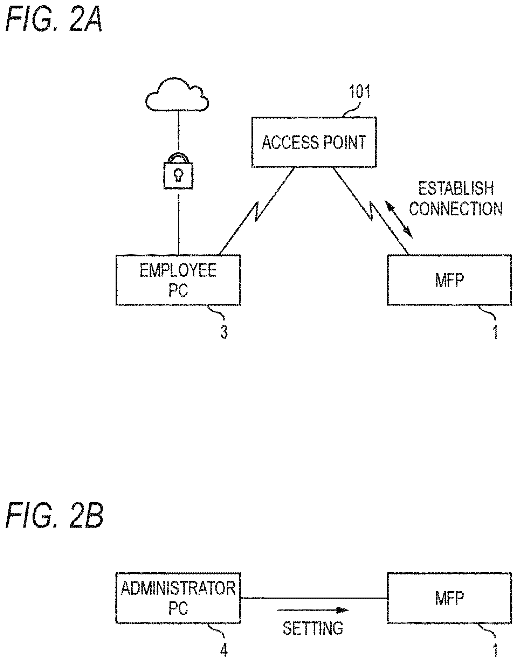

In a case where an employee performs a remote work, for example, as illustrated in FIG. 2A, an employee PC 3, which is a personal computer to be used (hereinafter, referred to as a "PC"), is often set by a user having an administrator authority so as to access information on a company using communication having a high security such as a VPN (abbreviation of Virtual Private Network). In addition, there are a wide variety of highly functional OS and antivirus software available for PCs. The user having an administrator authority can easily take a security measure for the employee PC 3 using the highly functional OS or the antivirus software.

For example, as illustrated in FIG. 2A, the MFP 1 used by the employee who performs a remote work may exchange image data with the employee PC 3 through communication via an access point 101. That is, in a case where the connection between the wireless LAN-IF 141 and the access point 101 is established, the MFP 1 is configured to receive an instruction related to image formation such as a print instruction or a scan instruction from an external device such as the employee PC 3, through wireless LAN communication via the access point 101. In this case, it is not preferable that the MFP 1 establishes the connection with an access point having a low security.

However, as compared with the PCs, there are not many security measure methods available for the MFP. In addition, an administrator of the MFP 1 cannot necessarily grasp an environment in which each employee uses the MFP 1, and thus it is difficult to individually designate an access point that is permitted to establish connection.

For example, as illustrated in FIG. 2B, the MFP 1 according to the present embodiment is configured to receive the setting of the access point that is permitted to establish connection, that is, the setting of a restriction condition, from an administrator PC 4 used by the administrator via the communication IF 14. The details of the restriction condition will be described later. For example, the MFP 1 receives the setting by the administrator before being installed in a remote work environment, and is installed in the remote work environment in a state where the setting is complete. The employee who performs a remote work can freely use the MFP 1 within a range of security measures, by using the MFP 1 based on the setting by the administrator.

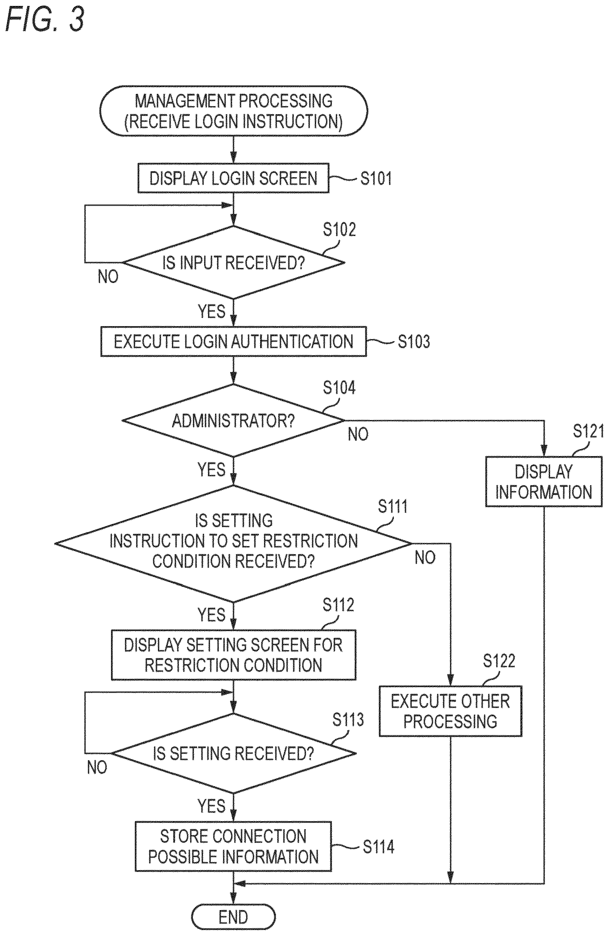

First, a procedure of a management processing will be described with reference to a flowchart of FIG. 3. The management processing is executed by the CPU 11 of the MFP 1, in response to reception of a login instruction to the MFP 1. The MFP 1 is configured to receive the login instruction via, for example, the EWS 23. The MFP 1 is configured to receive access to the EWS 23 through, for example, wired connection. In addition, the MFP 1 may be in a state where the setting of the access point is not received at the time of factory shipment. In addition, the MFP 1 may be in a state where no restriction condition is set.

In a case where the access to the EWS 23 is received via the communication IF 14, the MFP 1 can provide web page data to an access source device that is, for example, the administrator PC 4. A browser embedded in the administrator PC 4 is configured to display a web page based on the web page data provided by the MFP 1. The MFP 1 provides web page data indicating a login screen that is configured to receive input of authentication information, based on the reception of the login instruction, to cause the browser embedded in the administrator PC 4 to display the login screen (step S101).

In a case where a screen is displayed based on the web page data received from the MFP 1, the browser embedded in the administrator PC 4 is configured to transmit information indicating an operation received on the screen to the MFP 1. The MFP 1 is configured to acquire the input authentication information, based on the information received from the administrator PC 4. The CPU 11 acquires the authentication information input on the login screen (step S102), and executes login authentication based on the acquired authentication information (step S103).

The CPU 11 determines whether the user having an administrator authority has successfully logged in (step S104). For example, the MFP 1 stores, in the memory 12, authentication information for the administrator set in advance by a vendor at the time of factory shipment. The MFP 1 is configured to receive an instruction to change the authentication information for the administrator. The MFP 1 is configured to store the changed information in the memory 12, in a case where the MFP 1 receives the change instruction. In step S104, the CPU 11 determines whether the changed information matches the authentication information for the administrator stored in the memory 12.

In a case where it is determined that the changed information matches the authentication information for the administrator (step S104: YES), the CPU 11 determines whether an input of a setting instruction to set a restriction condition related to the wireless LAN communication is received through the screen of the provided web page data (step S111). In a case where it is determined that the changed information matches the authentication information for the administrator, the CPU 11 can provide the web page data for displaying a screen for the administrator. The state after the user having an administrator authority has successfully logged in is a state where the user having an administrator authority logs in and a state where the MFP is configured to receive an input by the administrator. In a case where the input to the web page displayed via the EWS 23 is received, the MFP 1 is configured to receive information indicating the input, from the browser embedded in the administrator PC 4.

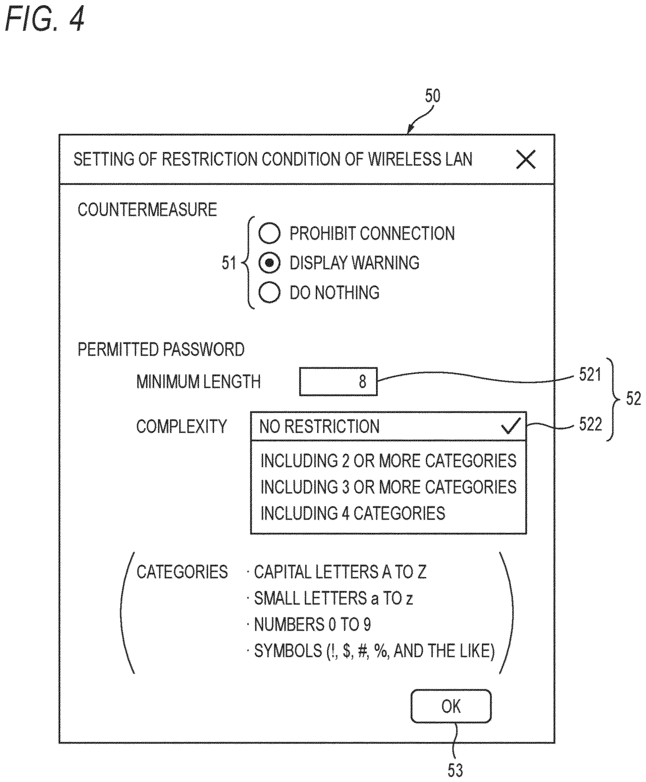

In a case where it is determined that the setting instruction to set the restriction condition related to the wireless LAN communication is received (step S111: YES), the CPU 11 provides web page data of a setting screen for receiving the setting of the restriction condition (step S112). In step S112, for example, as illustrated in FIG. 4, the CPU 11 provides a setting screen 50 on which restriction conditions related to a password used for establishing connection with an access point can be set. The restriction conditions are conditions for restricting the connection between the MFP 1 and the access point in which the password satisfying the conditions is set. The restriction conditions are examples of a connection restriction condition and a low security condition.

A password for connection authentication may be set for each access point. In addition, some access points do not require a password and can be used by selecting an SSID. An access point in which a long and complicated password is set is considered to be an access point having a high security, as compared with an access point in which a short password or a simple password is set, or an access point that does not require a password.

The setting screen 50 illustrated in FIG. 4 is a screen including a countermeasure selection button 51 and a restriction condition setting field 52. The selection button 51 is a button for selectively receiving the selection from, for example, "prohibit connection", "display warning", and "do nothing" as a countermeasure in a case where the password satisfies the restriction conditions. In a case where "do nothing" is selected by using the selection button 51, the MFP 1 does not perform connection restriction based on the password. In a case where "do nothing" is selected, the MFP 1 may not receive input to the restriction condition setting field 52.

In a case where one of "display warning" and "prohibit connection" is selected by using the selection button 51, the MFP 1 performs the connection restriction related to the password. For example, in a case where "display warning" is selected, and in a case where it is determined that the password satisfies the restriction condition, the MFP 1 displays a warning screen and establishes connection after the warning screen is displayed. On the other hand, in a case where "prohibit connection" is selected, and in a case where it is determined that the password satisfies the restriction condition, the MFP 1 does not establish the connection. "Display warning" and "prohibit connection" are examples of a restriction mode for restricting the wireless LAN communication. "Prohibit connection" is an example of a first restriction mode, and "display warning" is an example of a second restriction mode. The MFP 1 can operate with a high degree of freedom by receiving the selection of the restriction mode.

The restriction condition setting field 52 related to the password includes a minimum length 521 and a complexity 522. The minimum length 521 is a field for receiving the minimum number of characters permitted for a password as a numerical value. That is, a password whose number of characters is shorter than the numerical value set in the minimum length 521 is a password that satisfies the restriction condition. A short password is likely to be a password having a low security.

The complexity 522 is, for example, a field for receiving the selection of a condition related to a combination of character types included in a password. Specifically, the MFP 1 is configured to receive the selection of the minimum number of categories included in the permitted password. That is, a password including categories of which the number is less than the number of categories set in the complexity 522 is a password that satisfies the restriction condition. Examples of the category include capital letters in Latin characters, small letters in Latin characters, numbers, and symbols. A password having a small combination of character types included therein is likely to be a password having a low security.

In addition to the condition according to the number of categories, an option of the complexity 522 may be a condition for restricting a password that matches a rule indicating a simple configuration, such as dictionary check, prohibition of consecutive same characters, and prohibition of sequential numbers. A password having a simple configuration is likely to be a password having a low security. The MFP 1 may be configured to set a plurality of conditions of the complexity 522 in combination.

Returning to the description of the management processing in FIG. 3. The CPU 11 determines whether the setting instruction is received on the displayed setting screen (step S113). For example, the CPU 11 is configured to determine whether information indicating an input operation to an OK button 53 of the setting screen 50 is received from the browser embedded in the administrator PC 4, via the EWS 23.

In a case where the setting instruction is not received (step S113: NO), the CPU 11 changes the setting screen 50 being displayed, based on the information received from the browser embedded in the administrator PC 4,for example, based on the user's operation, and provides web page data of the changed screen. In a case where it is determined that the setting instruction is received (step S113: YES), the CPU 11 stores, in a nonvolatile storage area of the memory 12, the connection possible information 24 including information on the countermeasure selected by the selection button 51 and information on the restriction conditions set in the setting field 52 (step S114).

The MFP 1 is configured to provide the setting screen 50 in the state where the MFP 1 is configured to receive the input by the administrator, and is configured to receive the input of the restriction conditions by the administrator, through the setting screen 50. Accordingly, even in a case where the user of the MFP 1 freely selects the access point, the connection between the MFP 1 and the access point is restricted based on the restriction conditions set in advance by the administrator. A restriction procedure at the time of connection attempt will be described later.

In a case where it is determined that the authentication information received on the login screen is not the authentication information for the administrator (step S104: NO), the CPU 11 does not receive a setting instruction of the restriction conditions related to the password. In this case, the CPU 11 provides web page data for displaying a screen for general users other than the administrator (step S121). Therefore, an employee other than the administrator, for example, the employee who performs a remote work cannot set a restriction condition for establishing connection. As described above, the connection possible information 24 may be set only in a case where the MFP 1 is logged in with the administrator authority. That is, the MFP 1 is configured to limit a user who can set the restriction conditions related to the password to the administrator.

In a case where an access from the external device is received via the EWS 23, the MFP 1 may first display the screen for the general users (step S121). The MFP 1 may be configured to receive a login instruction via the screen for the general users. In this case, the MFP 1 may execute the login authentication based on the input authentication information (step S103), and in a case where it is determined that the authentication information for the administrator is received, the MFP 1 may display a screen for the administrator and receive a setting instruction to set the restriction conditions through the screen for the administrator (step S111).

In a case where the MFP 1 receives an instruction other than the setting instruction to set the restriction conditions even in a state where the MFP 1 is logged in with the administrator authority (step 5111: NO), the CPU 11 performs processing based on the input instruction (step S122). After step S114, the CPU 11 can receive various instructions and operates based on the received instruction. In a case where an instruction to end the processing is received, the CPU 11 ends the management processing.

In a case where the MFP 1 is logged in with the administrator authority via the EWS 23, the MFP 1 is configured to receive the setting via the network. Therefore, the administrator does not need to operate the user IF 13 of the MFP 1 at the time of setting, and the setting is easy. The MFP 1 may be configured to receive the setting of the restriction conditions, through the user IF 13. In this case, the MFP 1 is configured to receive the setting of the restriction conditions only in a state where the login with the administrator authority is received.

A restriction condition for restricting connection may be other than the length and the complexity of the password. For example, the MFP 1 may be configured to receive the setting of restriction conditions based on a type of an authentication method and a type of an encryption method of the access point, in addition to the restriction conditions such as the length and the complexity of the password. Alternatively, the MFP 1 may be configured to receive the setting of the restriction conditions based on the type of the authentication method and the type of the encryption method of the access point, instead of the restriction conditions such as the length and the complexity of the password. In these cases, the MFP 1 is configured to receive the setting of the restriction conditions only in the state where the login with the administrator authority is received.

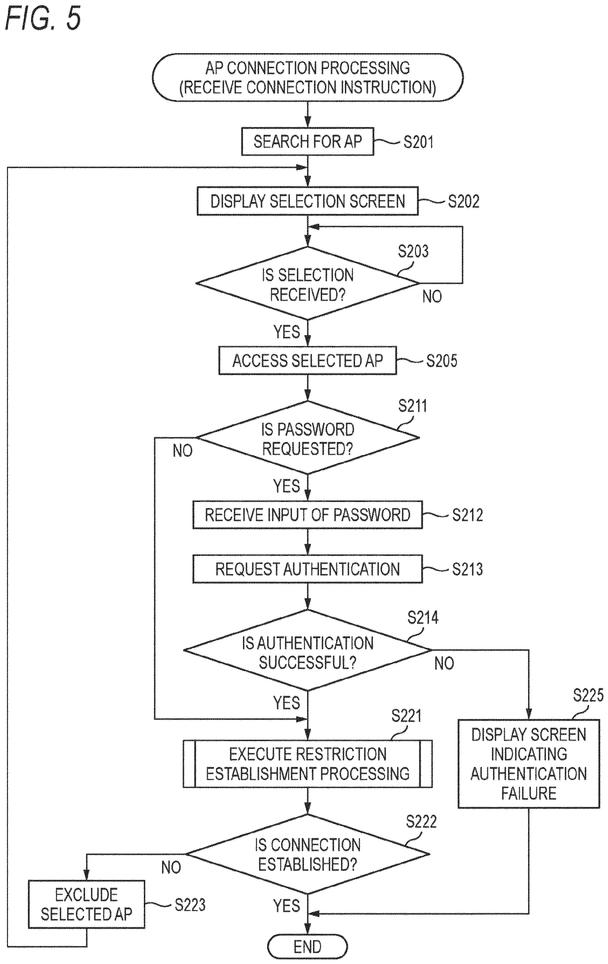

Next, a procedure of an AP connection processing will be described with reference to a flowchart of FIG. 5. The AP connection processing is performed by the CPU 11 of the MFP 1, in response to reception of a connection instruction to establish the connection with the access point, in a state where the connection with the access point is not established. The connection instruction is input on the touch panel 131 of the user IF 13 by the employee who performs a remote work, after the MFP 1 is installed in a use environment in which the remote work is performed.

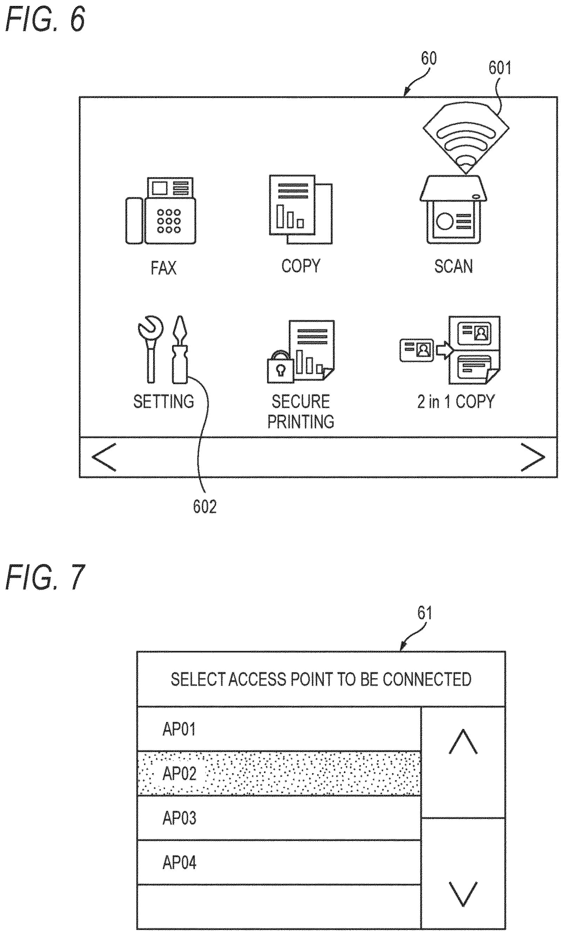

In a standby state, the MFP 1 is configured to cause the touch panel 131 of the user IF 13 to display, for example, a standby screen 60 as illustrated in FIG. 6. The employee who uses the MFP 1 can issue an instruction to connect the MFP 1 to the access point by, for example, operating a connection instruction icon 601 on the standby screen 60. In addition, in a case where an operation on a setting icon 602 on the standby screen 60 is received, the MFP 1 may display an operation menu including a button for receiving the instruction to connect to the access point.

In the AP connection processing, the CPU 11 searches for connectable access points via the wireless LAN-IF 141 (step S201). Step S201 is an example of a search processing. Then, the CPU 11 receives a response signal from the access point, and causes the touch panel 131 to display a selection screen including a list of information on access points, each of which is a transmission source of the response signal (step S202). For example, as illustrated in FIG. 7, the selection screen 61 includes access points as options, each of the access points receiving a response signal. When receiving a search signal, each access point transmits a response signal responding to the received search signal. The search signal is also referred to as a probe signal. In addition, transmitting a signal in a wireless LAN frequency band and searching for access points is also referred to as scanning the wireless LAN frequency band.

The CPU 11 determines whether a selection instruction from a user is received on the displayed selection screen 61 (step S203). Step S203 is an example of a selection processing. In a case where it is determined that the selection of the access point is not received (step S203: NO), the CPU 11 waits until the selection is received. According to the operation on the touch panel 131, the user can select an access point to attempt the establishment of connection from the access points displayed as the options. For example, "AP02" is selected on the selection screen 61 illustrated in FIG. 7.

In a case where it is determined that the selection of the access point is received on the selection screen 61 (step S203: YES), the CPU 11 accesses the selected access point (step S205), and determines whether the input of the password is requested (step S211). In a case where it is determined that the input of the password is requested (step S211: YES), the CPU 11 causes the touch panel 131 to display a password input screen and receives the input of the password (step S212). Step S212 is an example of a password reception processing. Then, the CPU 11 requests authentication by transmitting, to the access point selected in step S203, the password received in step S212 (step S213). Step S213 is an example of a connection attempt processing.

As a result of step S213, the CPU 11 determines whether the authentication is successful (step S214). In a case where there is a response indicating connection permission from the access point to which the password is transmitted, the CPU 11 determines that the authentication is successful. In a case where it is determined that no input of the password is requested (step S211: NO), or in a case where it is determined that the authentication of the password is successful (step S214: YES), the CPU 11 performs a restriction establishment processing (step S221). The restriction establishment processing is processing of determining whether the connection with the access point is restricted, and of establishing the connection in a case where the connection with the access point is not restricted.

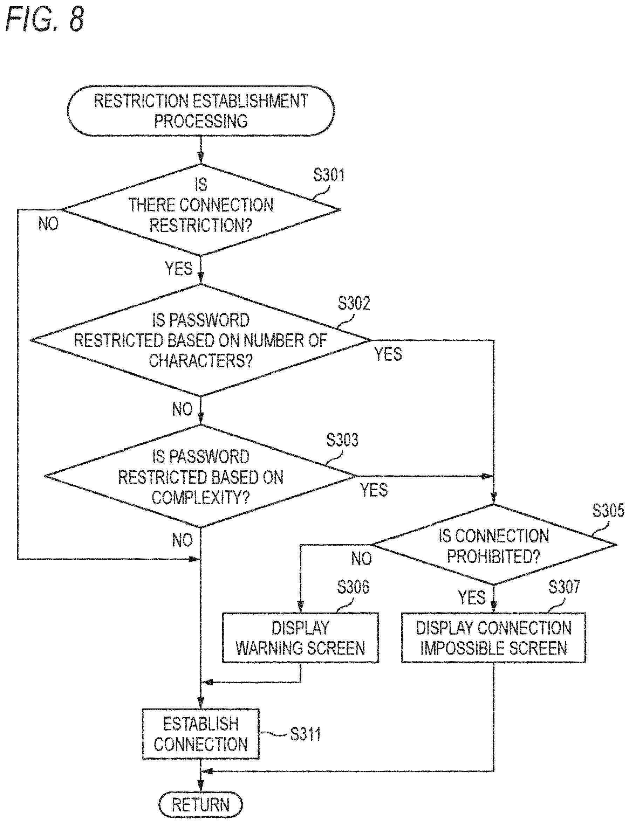

A procedure of the restriction establishment processing will be described with reference to a flowchart of FIG. 8. In the restriction establishment processing, the CPU 11 reads the connection possible information 24 stored in the memory 12 in step S114 of the management processing (see FIG. 3), and determines whether the connection restriction is provided (step S301). For example, in a case where the connection possible information 24 includes information indicating that "do nothing" is selected by using the countermeasure selection button 51 on the setting screen 50 (see FIG. 4), the CPU 11 determines that no connection restriction is provided. Hereinafter, "in a case where the connection possible information 24 includes the information indicating the selection" is simply referred to as "when being selected".

On the other hand, in a case where it is determined that the connection restriction is provided (step S301: YES), and, for example, in a case where "prohibit connection" or "display warning" is selected on the setting screen 50 (step see FIG. 4), the CPU 11 determines the restriction conditions related to the password. First, the CPU 11 determines whether to restrict the connection, based on the number of characters of the password (step S302). Specifically, in a case where the number of characters of the password received in step S212 of the AP connection processing (see FIG. 5) is smaller than the minimum length 521 received on the setting screen 50 (see FIG. 4), the CPU 11 determines that the connection is restricted.

In a case where it is determined that a password is sufficiently long and the connection is not restricted based on the number of characters (step S302: NO), the CPU 11 further determines whether to restrict the connection, based on the complexity of the password (step S303). Specifically, in a case where the number of combinations of character types included in the password is less than the number of combinations of character types received in the complexity 522 on the setting screen 50 (see FIG. 4), the CPU 11 determines that the password is restricted.

In a case where it is determined that no connection restriction is provided (step S301: NO), or in a case where it is determined that the password is not restricted based on the number of characters or the complexity (step S303: NO), the CPU 11 establishes the connection with the selected access point (step S311). The authentication of the password by the access point is successful, and thus the CPU 11 can establish the connection by transmitting a signal for starting communication to the access point. The CPU 11 may be configured to cause the touch panel 131 to display a screen indicating that the connection is established. After step S311, the CPU 11 ends the restriction establishment processing and returns to the AP connection processing.

On the other hand, in a case where it is determined that the connection is restricted based on at least one of the number of characters and the complexity of the password (step S302: YES or step S303: YES), the CPU 11 determines that the connection with the access point is restricted. The CPU 11 determines whether "prohibit connection" is selected by using the countermeasure selection button 51 (step S305).

The MFP 1 restricts the connection, in a case where the password set for the access point satisfies at least one of conditions of which the setting is received in the restriction condition setting field 52. The MFP 1 determines the restriction conditions, based on the password input by the user, in a case where the connection with the selected access point is established, thereby achieving a suitable operation. In particular, in a case where the MFP 1 determines the restriction conditions after there is the response indicating the connection permission from the access point, it is possible to avoid unnecessary processing such as performing a determination based on an unauthenticated password.

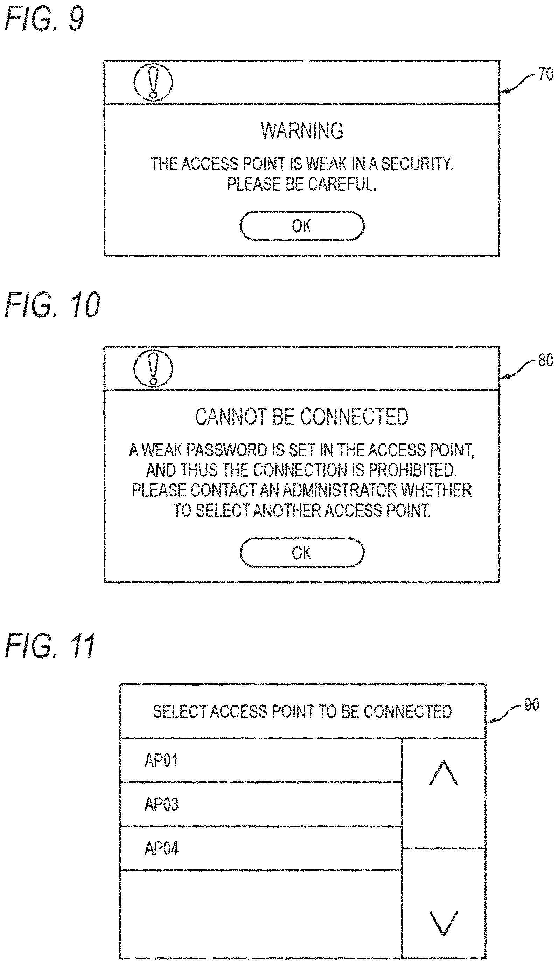

In a case where it is determined that "display warning" is selected instead of "prohibit connection" (step S305: NO), the CPU 11 causes the touch panel 131 to display a warning screen 70 for calling attention of the user, for example, as illustrated in FIG. 9 (step S306). Step S306 is an example of a restriction processing. The warning screen 70 is an example of a first message. Step S306 is an example of a first message display processing. Further, the CPU 11 establishes the connection with the selected access point (step S311), ends the restriction establishment processing, and returns to the AP connection processing.

Although the connection with the access point is not prohibited, a security of the wireless LAN communication via the access point is warned, and thus it is expected to reduce printing using the wireless LAN communication via the access point. After waiting for the user to close the warning screen 70, the CPU 11 may proceed to step S311, and establish the connection. For example, in a case where no closing operation of the warning screen 70 is received even after a predetermined period of time elapses after the warning screen 70 is displayed, the CPU 11 may proceed to step S222 of the AP connection processing without establishing the connection.

In a case where it is determined that "prohibit connection" is selected (step S305: YES), for example, as illustrated in FIG. 10, the CPU 11 causes the touch panel 131 to display a connection impossible screen 80 indicating connection impossible (step S307), ends the restriction establishment processing without establishing the connection with the selected access point, and proceeds to step S222 of the AP connection processing. The procedure of ending the processing without performing step S311 after step S307 is an example of processing of not establishing the connection and is an example of the restriction processing. The connection impossible screen 80 is an example of the first message, and step S307 is an example of the first message display processing. The MFP 1 does not perform the wireless LAN communication via the access point by not connecting with the access point. The CPU 11 may end the restriction establishment processing, in a case where the connection impossible screen 80 is closed based on the user's operation. Alternatively, the CPU 11 may end the restriction establishment processing, in a case where the connection impossible screen 80 is displayed for a predetermined period of time.

In a case where restriction conditions other than the length and the complexity of the password are set, the CPU 11 determines whether the set restriction conditions are satisfied, in addition to step S302 and step S303 or instead of step S302 and step S303. In a case where it is determined that at least one of the restriction conditions is satisfied, the CPU 11 proceeds to step S305.

Returning to the description of the procedure of the AP connection processing in FIG. 5. After the restriction establishment processing of step S221 is performed, the CPU 11 determines whether the connection with the access point is established (step S222). In a case where it is determined that the connection with the access point is established (step S222: YES), the CPU 11 ends the AP connection processing.

The MFP 1 may determine the restriction conditions, before transmitting the input password to the access point. In this case, the CPU 11 perform processing corresponding to step S301 to step S307 of the restriction establishment processing between step S212 and step S213. In a case where the CPU 11 determines YES in step S303 and after the CPU 11 determines NO in step S305 and performs step S306, the CPU 11 may proceed to step S213 instead of proceeding to step S311. In a case where the CPU 11 determines YES in step S305 and performs step S307, the CPU 11 may proceed to step S225.

After the restriction establishment processing of step S221 is performed, in a case where the CPU 11 determines that the connection is not established (step S222: NO), the CPU 11 excludes, from the list of access points (step S223), the access point selected in step S203, that is, the access point for which the connection is not established in the restriction establishment processing, and proceeds to step S202. That is, the CPU 11 displays the selection screen again, and re-performs processing of receiving the selection of the access point for which the connection is attempted on the newly displayed selection screen.

In step S202 after the access point for which the connection is not established in the restriction establishment processing is excluded from the list of access points, the CPU 11 excludes the access point "AP02" selected on the previous selection screen 61 (see FIG. 7), and displays a selection screen 90 including the access points other than the "AP02" as options, for example, as illustrated in FIG. 11. In a case where a user's operation of selecting an access point, among the access points other than the access point with which the connection is not established in the restriction establishment processing, is received on the selection screen 90 (step S203: YES), the CPU 11 proceeds to step S205.

That is, even in a case where the restriction conditions are satisfied, the MFP 1 proceeds to step S202 again, and thus it is easy to reselect an access point different from the access point for which the connection is not established in the restriction establishment processing. In addition, after excluding the access point selected in step S203 from the list of access points, the MFP 1 may proceed to step S201, search for the access points again, and display the selection screen 90 including the access points other than the "AP02" excluded from among the access points, each of which is the transmission source of the response signal.

The CPU 11 may display the selection screen 90, in parallel with the display of the connection impossible screen 80. In this case, in a case where the selection is received on the selection screen 90, the CPU 11 may close the connection impossible screen 80 and proceed to step S205.

On the other hand, in a case where it is determined that the authentication of the password is not successful (step S214: NO), that is, in a case where there is a response indicating connection non-permission from the access point to which the password is transmitted, the CPU 11 causes the touch panel 131 to display a screen indicating authentication failure (step S225), and ends the AP connection processing. The screen indicating authentication failure is, for example, a screen including a message related to authentication failure of a password, and is a screen different from the warning screen 70 or the connection impossible screen 80. The screen indicating authentication failure is an example of a second message, and step S225 is an example of a second message display processing. The MFP 1 displays different messages between the case in which the password satisfies the restriction conditions and the case in which the authentication of the password fails, and thus the user can grasp a reason why the connection is not possible. In a case where the authentication of the password is not successful, the MFP 1 cannot connect to the access point. The screen indicating authentication failure is also the second message related to connection failure.

The CPU 11 may proceed to step S212 after step S225 and receive the re-input of the password. In addition, the CPU 11 may proceed to step S202 after step S225 and display the selection screen 61 (see FIG. 7) again.

In a case where the connection with the access point is successfully established (YES in step S222), the MFP 1 can receive an instruction from the external device such as the employee PC 3 (see FIG. 2A) through the wireless LAN communication via the access point. The employee who performs a remote work can use the employee PC 3 to transmit the instruction related to the image formation such as a print instruction or a scan instruction to the MFP 1. The MFP 1 is configured to perform printing using the print engine 15 and scanning using the scanner 16, based on the received instruction.

For example, even in a case where the connection with the access point selected on the selection screen 61 (see FIG. 7) is restricted and the selection screen 90 (see FIG. 11) in which the access point for which the connection is not established in the restriction establishment processing (see FIG. 8) is excluded is displayed, in a case where a connection instruction to establish connection with an access point is received after the MFP 1 is restarted due to, for example, a power supply of the MFP 1 being turned off, the CPU 11 starts the execution of the AP connection processing (see FIG. 5), searches for the access points (step S201), and displays a list of the searched access points without excluding the access point for which the connection is not established in the restriction establishment processing (step S202). That is, in a case where the password of the access point for which the connection is not established in the restriction establishment processing is changed to a password for which connection is not restricted and the MFP 1 is restarted, the user can select again the access point for which the password is changed. The user may change the password and restart the MFP 1.

In a case where the AP connection processing (see FIG. 5) ends, the CPU 11 causes the user IF 13 to display the standby screen 60 illustrated in FIG. 6. In addition, in a case where the CPU 11 receives an operation of instructing the display of the standby screen 60 via the user IF 13 even when the AP connection processing or the restriction establishment processing is performed, the CPU 11 ends each processing being performed and displays the standby screen 60. In addition, even in a case where the connection with the access point selected on the selection screen 61 (see FIG. 7) is restricted and the selection screen 90 (see FIG. 11) in which the access point for which the connection is not established in the restriction establishment processing is excluded is displayed, in a case where the connection instruction to establish the connection with the access point is received via the user IF 13 after the standby screen 60 is displayed, the CPU 11 starts the execution of the AP connection processing, searches for the access points (step S201), and displays the list of the searched access points without excluding the access point for which the connection is not established in the restriction establishment processing (step S202). That is, in a case where the password of the access point for which the connection is not established in the restriction establishment processing is changed to the password for which the connection is not restricted and the standby screen is displayed, the user can select again the access point for which the password is changed.

After a certain period of time has elapsed, for example, after the MFP 1 is restarted or after a predetermined standby screen is displayed, the password of the access point may be changed. Even in a case where the selection screen 90 (see FIG. 11) in which the access point for which the connection is not established in the restriction establishment processing is excluded is displayed, for example, when a predetermined period of time has elapsed, the CPU 11 may display the selection screen in which the access point for which the connection is not established in the restriction establishment processing is not excluded. In this case, the CPU 11 may search for the access points (step S201) and display the list of the searched access points without excluding the access point for which the connection is not established in the restriction establishment processing (step S202).

Although the description has been made assuming that the restriction conditions are set before the MFP 1 is installed in the remote work environment, the MFP 1 may be configured to receive the setting of the restriction conditions after the MFP 1 is installed in the remote work environment. For example, the MFP 1 may receive the setting of the restriction conditions when being installed in the remote work environment and then receiving an access from the administrator via a network. In addition, the MFP 1 may be configured to receive the setting of the restriction conditions before being installed in the remote work environment, or may be configured to receive the change of the restriction conditions, for example, when receiving the access from the administrator via the network.

As described above in detail, the MFP 1 according to the present embodiment is configured to receive the setting of the password used for the connection with the access point by the administrator of the restriction conditions for restricting the connection. Specifically, the MFP 1 is configured to receive the setting of a range of passwords in which the connection is permitted, based on a strength of the passwords used for the connection with the access point. In a case where the set restriction conditions are satisfied, the MFP 1 restricts the wireless LAN communication via the access point, regardless of whether the input password is authenticated by the access point. Accordingly, the administrator can set the MFP 1 not to be permitted to be connected to and used at the access point having a low security. That is, depending on the setting of the restriction conditions, it is possible to restrict the use of the access point to which the password having a possibility of a low security is set, while it is also possible to not restrict the use of the access point even in a case where the password having a possibility of a low security is set. Therefore, the degree of freedom in the case of using the wireless LAN in the MFP 1 is high, and it is possible to achieve an operation with a high degree of freedom in consideration of security and convenience. For example, in a case where the MFP 1 is used in the environment in which the employee performs a remote work, it is possible to restrict the wireless LAN communication via the access point to be authenticated using the password having a possibility of a low security, thereby reducing a risk of information leakage from the access point.

The MFP 1 according to the present embodiment is configured to receive the setting by the administrator of the low security condition indicating that the security of the access point is low. The MFP 1 receives the selection of an access point to be connected from the searched access points via the user IF 13. The MFP 1 restricts the wireless LAN communication via the access point, in a case where the selected access point satisfies the set restriction conditions. Even in this case, the degree of freedom in the case of using the wireless LAN in the MFP 1 is high, and it is possible to achieve the operation with the high degree of freedom in consideration of the security and the convenience.

While the invention has been described in conjunction with various example structures outlined above and illustrated in the figures, various alternatives, modifications, variations, improvements, and/or substantial equivalents, whether known or that may be presently unforeseen, may become apparent to those having at least ordinary skill in the art. Accordingly, the example embodiments of the disclosure, as set forth above, are intended to be illustrative of the invention, and not limiting the invention. Various changes may be made without departing from the spirit and scope of the disclosure. Therefore, the disclosure is intended to embrace all known or later developed alternatives, modifications, variations, improvements, and/or substantial equivalents. Some specific examples of potential alternatives, modifications, or variations in the described invention are provided below. For example, an example of the image forming apparatus is not limited to the MFP, may be a printer, a scanner, a FAX device, and the like, and any device having at least a wireless communication function and an image forming function can be applied.

Display modes of the various screens illustrated in the present embodiment are examples, and the words and the arrangement of the options and the buttons displayed on the respective screens are not limited to the illustrated examples. For example, the display modes of the setting screen 50 (see FIG. 4), the warning screen (see FIG. 9), and the connection impossible screen (see FIG. 10) are not limited to the illustrated examples.

For example, the MFP 1 is configured to receive a login instruction to start the management processing via the EWS 23 in the present embodiment, and the MFP 1 may be configured to receive the login instruction via the user IF 13. In addition, the MFP 1 may receive a login instruction via any one of the EWS 23 and the user IF 13, or may receive a login instruction via only one of the EWS 23 and the user IF 13. In addition, the MFP 1 may be configured to receive a login instruction not only by an operation on the touch panel 131 but also by an operation on a button provided in the user IF 13, or may be configured to receive a login instruction through near range wireless communication with an IC card or the like in conformity with NFC (abbreviation of Near Field Communication) standard.

The MFP 1 is configured to permits all the access points that receive the response signal regardless of the connection possible information 24 in a state where the MFP 1 is logged in with the administrator authority, and the present invention is not limited thereto. The MFP 1 may determine the permitted access points, based on the connection possible information 24, regardless of whether the MFP 1 is logged in. In this case, step S203 of the AP connection processing (see FIG. 5) may be omitted.

In any sequence diagram disclosed in the embodiment, an execution order of a plurality of processing in any plurality of steps can be freely changed or can be executed in parallel within a range in which no contradiction occurs in a processing content.

The processing disclosed in the embodiment may be executed by hardware such as a single CPU, a plurality of CPUs, and an ASIC, or a combination thereof. In addition, the processing disclosed in the embodiment can be implemented in various modes such as a recording medium in which a program for executing the processing is recorded, or a method.

## Claims

1. An image forming apparatus comprising:
a wireless LAN interface;
a user interface;
an image forming engine; and
a computer,
wherein the image forming apparatus is configured to receive an instruction related to image formation from an external device, through wireless LAN communication via a wireless LAN access point for which connection with the wireless LAN interface is established, and
in a case where the image forming apparatus receives the instruction related to the image formation from the external device, through the wireless LAN communication via the wireless LAN access point for which the connection is established, the image forming apparatus is configured to cause the image forming engine to form an image,
the computer is configured to set a connection restriction condition related to a password, in a state where the image forming apparatus is configured to receive an input by an administrator, and
in a case where the image forming apparatus receives a connection instruction via the user interface, in a state where the connection between the wireless LAN access point and the wireless LAN interface is not established, the computer is further configured to perform:
a connection attempt processing of attempting to establish the connection between the wireless LAN access point and the wireless LAN interface; and
in a case where authentication using a password is necessary for establishing the connection between the wireless LAN access point and the wireless LAN interface and in a case where the password used for establishing the connection satisfies the connection restriction condition set by the administrator, a restriction processing of restricting the wireless LAN communication via the wireless LAN access point.

2. The image forming apparatus according to claim 1,
wherein in a case where the image forming apparatus receives the connection instruction the user interface, in a state where the connection between the wireless LAN access point and the wireless LAN interface is not established, the computer is configured to perform:
a search processing of searching for wireless LAN access points configured to be connected with the wireless LAN interface; and
a selection processing of receiving selection of the wireless LAN access point to be connected, from the wireless LAN access points searched for in the search processing, via the user interface,
in a case where authentication using a password is necessary for establishing connection between the wireless LAN interface and the wireless LAN access point selected in the selection processing, the computer is further configured to perform a password reception processing of receiving an input of the password via the user interface,
in the connection attempt processing, the connection between the wireless LAN interface and the wireless LAN access point selected in the selection processing is attempted to be established using the password received in the password reception processing, and,
in the restriction processing, in a case where the password received in the password reception processing satisfies the connection restriction condition set by the administrator, the wireless LAN communication via the wireless LAN access point selected in the selection processing is restricted.

3. The image forming apparatus according to claim 2,
wherein the computer is configured to:
in a case where there is a response indicating connection permission from the wireless LAN access point selected in the selection processing as a result of performing the connection attempt processing, determine whether the password received in the password reception processing satisfies the connection restriction condition set by the administrator,
in a case where it is determined that the password received in the password reception processing does not satisfy the connection restriction condition, establish the connection between the wireless LAN interface and the wireless LAN access point selected in the selection processing, and
in a case where it is determined that the password received in the password reception processing satisfies the connection restriction condition, restrict the wireless LAN communication via the wireless LAN access point selected in the selection processing be performing the restriction processing.

4. The image forming apparatus according to claim 3,
wherein the computer is configured to:
in a case where the wireless LAN communication via the wireless LAN access point selected in the selection processing is restricted by determining that the password received in the password reception processing satisfies the connection restriction condition and performing the restriction processing, perform a first message display processing of causing the user interface to display a first message related to a security of a password, and
in a case where there is a response indicating connection non-permission from the wireless LAN access point selected in the selection processing, perform a second message display processing of causing the user interface to display a second message related to password authentication failure, wherein the connection between the wireless LAN interface and the wireless LAN access point selected in the selection processing is not established.

5. The image forming apparatus according to claim 3, further comprising:
a memory,
wherein the computer is configured to:
provide a setting screen on which the connection restriction condition is configured to be set, in a state where the image forming apparatus is configured to receive an input by the administrator, and
in a case where the image forming apparatus receives setting of the connection restriction condition via the setting screen, store the received connection restriction condition in the memory, and
in a case where it is determined that the password received in the password reception processing satisfies the connection restriction condition stored in the memory, perform the restriction processing.

6. The image forming apparatus according to claim 5, further comprising:
an embedded web server that is a program for causing the image forming apparatus to function as a web server,
wherein, in a case where the embedded web server is accessed and a user who has an administrator authority logs in the embedded web server, the computer is configured to:
provide a web page indicating the setting screen to an access source by the embedded web server, and
receive the setting of the connection restriction condition based on input to the web page.

7. The image forming apparatus according to claim 5,
wherein the connection restriction condition includes a minimum length of the password.

8. The image forming apparatus according to claim 5,
wherein the connection restriction condition includes a condition that matches a rule indicating a simple configuration.

9. The image forming apparatus according to claim 5,
wherein the connection restriction condition includes a condition related to a combination of character types.

10. The image forming apparatus according to claim 3,
wherein in a case where it is determined that the password received in the password reception processing satisfies the connection restriction condition, the computer is configured to re-perform the selection processing, and
in the re-performed selection processing, among the wireless LAN access points searched for in the search processing, the wireless LAN access point selected in the selection processing performed earlier is excluded from the selectable wireless LAN access points.

11. The image forming apparatus according to claim 10,
wherein even in a case where it is determined that the password received in the password reception processing satisfies the connection restriction condition and the wireless LAN access point selected in the selection processing performed earlier is not selectable in the selection processing performed later, the computer is configured to receive the selection of the wireless LAN access point that is not selectable before restart of the image forming apparatus, in the selection processing executed after the restart.

12. The image forming apparatus according to claim 10,
wherein the computer is configured to cause the user interface to display a predetermined standby screen after start of the image forming apparatus, and
even in a case where it is determined that the password received in the password reception processing satisfies the connection restriction condition and the wireless LAN access point selected in the selection processing performed earlier is not selectable in the selection processing performed later, the computer is further configured to receive the selection of the wireless LAN access point that is not selectable in the selection processing performed via the display of the predetermined standby screen.

13. The image forming apparatus according to any one of claims 1 to 12,
wherein in the restriction processing, the wireless LAN communication via the wireless LAN access point is restricted by not connecting to the wireless LAN access point.

14. The image forming apparatus according to any one of claims 1 to 12,
wherein in the restriction processing, a warning is issued using the user interface, the warning indicating that a security of the wireless LAN communication via the wireless LAN access point is low.

15. The image forming apparatus according to any one of claims 1 to 12,
wherein the computer is configured to set any one of a first restriction mode and a second restriction mode, as a restriction mode in which the wireless LAN communication via the wireless LAN access point is restricted, in the state where the image forming apparatus is configured to receive the input by the administrator, and
in the restriction processing:
in a case where the first restriction mode is set, the wireless LAN communication via the wireless LAN access point is restricted by not connecting to the wireless LAN access point, and
in a case where the second restriction mode is set, a warning is issued using the user interface, the warning indicating that a security of the wireless LAN communication via the wireless LAN access point is low.

16. An image forming apparatus comprising:
a wireless LAN interface;
a user interface;
an image forming engine; and
a computer,
wherein the image forming apparatus is configured to receive an instruction related to image formation from an external device, through wireless LAN communication via a wireless LAN access point for which connection with the wireless LAN interface is established, and
the image forming apparatus is configured to cause the image forming engine to form an image, in a case where the image forming apparatus receives the instruction related to the image formation from the external device, through the wireless LAN communication via the wireless LAN access point for which the connection is established,
the computer is configured to set a low security condition indicating that a security of the wireless LAN access point is low, in a state where the image forming apparatus is configured to receive an input by an administrator, and
in a case where a connection instruction is received via the user interface in a state where the connection with the wireless LAN access point is not established, the computer is further configured to perform:
a search processing of searching for connectable wireless LAN access points;
a selection processing of receiving selection of the wireless LAN access point to be connected, from the wireless LAN access points searched for in the search processing, via the user interface; and
a restriction processing of restricting the wireless LAN communication via the wireless LAN access point selected in the selection processing, in a case where the wireless LAN access point selected in the selection processing satisfies the low security condition set by the administrator.

17. The image forming apparatus according to claim 16,
wherein the computer is configured to:
determine whether the wireless LAN access point selected in the selection processing satisfies the low security condition set by the administrator,
in a case where it is determined that the wireless LAN access point selected in the selection processing does not satisfy the low security condition, establish the connection between the wireless LAN access point selected in the selection processing and the wireless LAN interface, and
in a case where it is determined that the wireless LAN access point selected in the selection processing satisfies the low security condition, restrict the wireless LAN communication via the wireless LAN access point selected in the selection processing according to the restriction processing.

18. The image forming apparatus according to claim 17,
wherein the computer is configured to:
in a case where the wireless LAN communication via the wireless LAN access point selected in the selection processing is restricted by determining that the wireless LAN access point selected in the selection processing satisfies the low security condition and performing the restriction processing, perform a first message display processing of causing the user interface to display a first message related to the security of the wireless LAN access point selected in the selection processing, and
in a case where there is a response indicating connection non-permission from the wireless LAN access point selected in the selection processing, perform a second message display processing of causing the user interface to display a second message related to connection failure, wherein the connection with the wireless LAN access point selected in the selection processing is not established.

19. The image forming apparatus according to claim 16,
wherein the computer is configured to re-perform the selection processing, in a case where it is determined that the wireless LAN access point selected in the selection processing satisfies the low security condition, and
in the re-performed selection processing, among the wireless LAN access points searched for in the search processing, the wireless LAN access point selected in the selection processing performed earlier is excluded from the selectable wireless LAN access points.
